Europäisches Patentamt

European Patent Office

Office européen des brevets

(19)

(11) Numéro de publication : **0 035 727**
**B1**

# (12) FASCICULE DE BREVET EUROPÉEN

(45) Date de publication du fascicule du brevet :
**15.08.84**

(21) Numéro de dépôt : **81101475.2**

(22) Date de dépôt : **02.03.81**

(51) Int. Cl.³ : **H 02 J   9/06// H04M19/00**

(54) **Système de distribution d'énergie pour ensembles électroniques.**

(30) Priorité : **07.03.80 FR 8005141**

(43) Date de publication de la demande :
**16.09.81 Bulletin 81/37**

(45) Mention de la délivrance du brevet :
**15.08.84 Bulletin 84/33**

(84) Etats contractants désignés :
**AT BE CH DE FR GB IT LI LU NL SE**

(56) Documents cités :
DE-A- 2 055 754
DE-A- 2 642 464
US-A- 3 461 309
BULLETIN SEV/VSE, vol. 68, no. 22, novembre 1977,
Zürich, (CH) P. EBERLI: "Alimentations de secours
avec des accumulateurs sans entretien", pages
1171-1174
ERICSSON REVIEW, vol. 53, no. 3, 1976, Stockholm,
(SE) C. BOIJE: "Optimization of power supply equipment for modern telecommunication systems",
pages 142-151
ERICSSON REVIEW, vol. 56, no. 1, 1979, Stockholm,
(SE) A. HANSSON: "Uninterruptible AC power supply
system, type BZV 102, pages 34-39

(73) Titulaire : **COMPAGNIE INDUSTRIELLE DES TELE-
COMMUNICATIONS CIT-ALCATEL S.A. dite:**
**12, rue de la Baume**
**F-75008 Paris (FR)**

(72) Inventeur : **Nouet, Christian**
**11, avenue Pierre Sémard**
**F-91700 Sainte Geneviève des Bois (FR)**

(74) Mandataire : **Weinmiller, Jürgen et al**
**Zeppelinstrasse 63**
**D-8000 München 80 (DE)**

## Description

L'invention concerne un système de distribution d'énergie électrique pour ensembles électroniques. Elle est applicable principalement dans les industries électroniques, les télécommunications et l'informatique, en particulier pour la distribution d'énergie des autocommutateurs.

Les ensembles électroniques, dont la fiabilité augmente sans cesse, exigent généralement une alimentation très faible et à l'épreuve de toute interruption.

Parallèlement on demande à ces alimentations de s'adapter facilement aux différents réseaux de distribution d'énergie primaire, de permettre de diminuer le volume et la complexité des équipements de ces réseaux, et d'être elles-mêmes constituées d'un petit nombre d'éléments peu volumineux et robustes.

En particulier, dans le cas d'un système de distribution comportant une source alimentée par un réseau primaire, par exemple le secteur habituel alternatif 220 volts, et secourue par une batterie d'accumulateurs, les systèmes connus présentent un inconvénient qui ne permet pas de satisfaire les exigences énoncées plus haut.

En effet la batterie étant placée en tampon de manière à prendre immédiatement le relais de l'alimentation en cas de panne du secteur, le système doit fournir en parallèle, au moment où le secteur est rétabli, le courant d'alimentation normal de l'installation et le courant de recharge de la batterie.

Ceci exige des moyens volumineux et complexes surdimensionnés. En effet les organes électroniques de l'installation sont généralement alimentés par l'intermédiaire de sources secondaires telles que convertisseurs ou onduleurs, sources qui possèdent leur propre régulation et ne nécessitent pas de régulation de la source primaire qui les alimente. Par contre la charge de la batterie nécessite une alimentation très bien régulée. Ce type d'installation exige donc une source primaire régulée pour toute sa puissance, alors qu'en fait la régulation est rendue nécessaire pour le branchement de la batterie en tampon : d'une part pour la recharge de la batterie, d'autre part pour la commutation de l'installation entre l'alimentation primaire et la batterie, réalisée normalement par des diodes nécessitant un réglage précis de la différence de tension entre la sortie de la source et la batterie.

L'invention a pour but de répondre aux exigences cités plus haut, et de remédier aux inconvénients que l'on vient décrire.

L'invention a pour objet un système de distribution d'énergie pour ensembles électroniques formé d'une part d'une alimentation primaire reliée à un réseau alternatif et comportant une source primaire utilisée en fonctionnement normal et une source primaire de secours, et d'autre part d'une alimentation secondaire comportant des sources secondaires régulées implantées dans lesdits ensembles électroniques, caractérisé par le fait que ladite source primaire utilisée en fonctionnement normal est reliée dans chacun desdits ensembles à un premier groupe de sources secondaires régulées, et par le fait que ladite source primaire de secours est secourue par une batterie tampon et est reliée dans chacun desdits ensembles à un second groupe de sources secondaires régulées.

Selon une autre caractéristique de l'invention, la source primaire n'est pas secourue et ne délivre plus aucun courant en cas de panne du réseau.

Suivant une autre caractéristique de l'invention, cette source primaire est formée de redresseurs non régulés.

Suivant encore une autre caractéristique de l'invention, ladite source primaire de secours comporte au moins un redresseur régulé dimensionné pour pouvoir fournir simultanément le courant de charge à la batterie et le courant de fonctionnement à vide au second groupe de sources secondaires régulées.

Les caractéristiques de l'invention apparaîtront clairement dans la description et les dessins annexés qui représentent les applications suivantes :

Figure 1  Alimentation d'ensembles électroniques par des convertisseurs continu-continu

Figure 2  Branchement en parallèle de deux convertisseurs en mode normal secours d'une alimentation dupliquée

Figure 3  Alimentation d'ensembles électroniques par convertisseurs continu-continu et alternatif-continu

Figure 4  Alimentation sans coupure d'appareils en courant alternatif par des onduleurs

Figure 5  Variante de la figure 4 avec alimentation non secourue directement reliée au secteur

Figure 6  Alimentation d'ensembles électroniques dont la source secondaire est redondante

Figure 7  Alimentation par source secourue et source non secourue d'ensembles électroniques redondants.

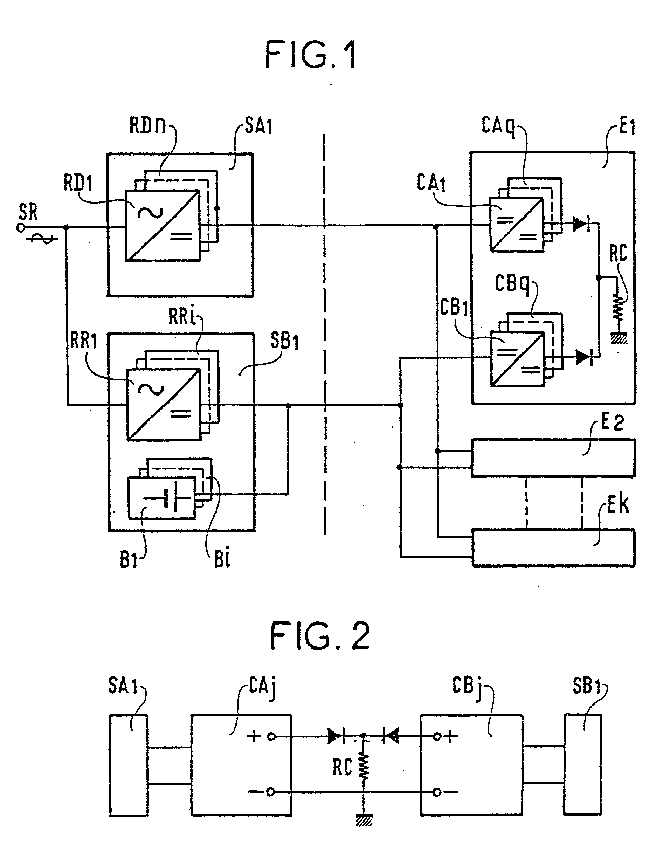

Une première application de l'invention concerne l'alimentation d'une charge en courant continu à partir d'un secteur alternatif (figure 1). Il s'agira par exemple d'un système de distribution d'énergie pour un central téléphonique.

Le secteur alternatif SR (réseau) alimente deux sources primaires SA1, SB1 capables chacune d'alimenter l'ensemble du central. Comme on le verra plus loin, en fonctionnement normal la source SA1 alimente le central et la source SB1 fonctionne en faible débit. La source SA1 n'est pas secourue, et la source SB1 possède une batterie en tampon.

La source SA1, est formée de 1 à n redresseurs filtrés de type courant (RD1 à RDn), par exemple utilisant un pont de diodes suivi d'un filtre à capacité et inductance.

La source secourue SB1 comporte 1 à i redresseurs régulés (RR1 à RRi) secourus par des batteries (B1 à Bi) montées en tampon.

Le central comporte 1 à k ensembles électroniques (E1 à Ek) occupant par exemple chacun un bâti, et dont la charge est représentée sur la figure par une résistance RC.

L'alimentation secondaire est constituée par des convertisseurs continu-continu. Cette alimentation peut être dupliquée ou redondante. Dans cette application on supposera que l'alimentation est dupliquée. Chaque ensemble électronique comporte 1 à q convertisseurs CA1 à CAq, utilisés en fonctionnement normal, et 1 à q convertisseurs de secours CB1 à CBq, couplés chacun à l'un des convertisseurs CA.

Les convertisseurs CA sont alimentés par la source SA1 et les convertisseurs CB par la source SB1.

Les sources SA1 et SB1 peuvent alimenter en parallèle 1 à k ensembles E1 à Ek du central.

Le fonctionnement du système est le suivant :
— fonctionnement normal : l'alimentation est fournie par la chaîne : réseau SR, source primaire SA1, source secondaire (convertisseurs) CA1 à CAq. Les sources (convertisseurs) de secours CB1 à CBq sont alimentées mais fonctionnent à vide, prêtes à relayer les sources CA en cas de panne (figure 2).
— panne du secteur : l'alimentation est fournie par les batteries B et les convertisseurs CB.
— rétablissement du secteur : retour au fonctionnement normal sauf pour la source SB1, les redresseurs régulés RR fournissant le courant de recharge des batteries.
— panne d'un convertisseur CAJ : le convertisseur CBJ prend automatiquement la relève.

Le système utilise une alimentation primaire régulée de faible puissance qui ne sert qu'à alimenter à vide la chaîne secondaire de secours et à maintenir la charge de la batterie.

Dans le dernier cas de panne cité, suivant que la puissance demandée par le convertisseur CB, dépasse ou non la puissance disponible en sortie des redresseurs régulés de la chaîne primaire, il y aura automatiquement utilisation ou non de la batterie.

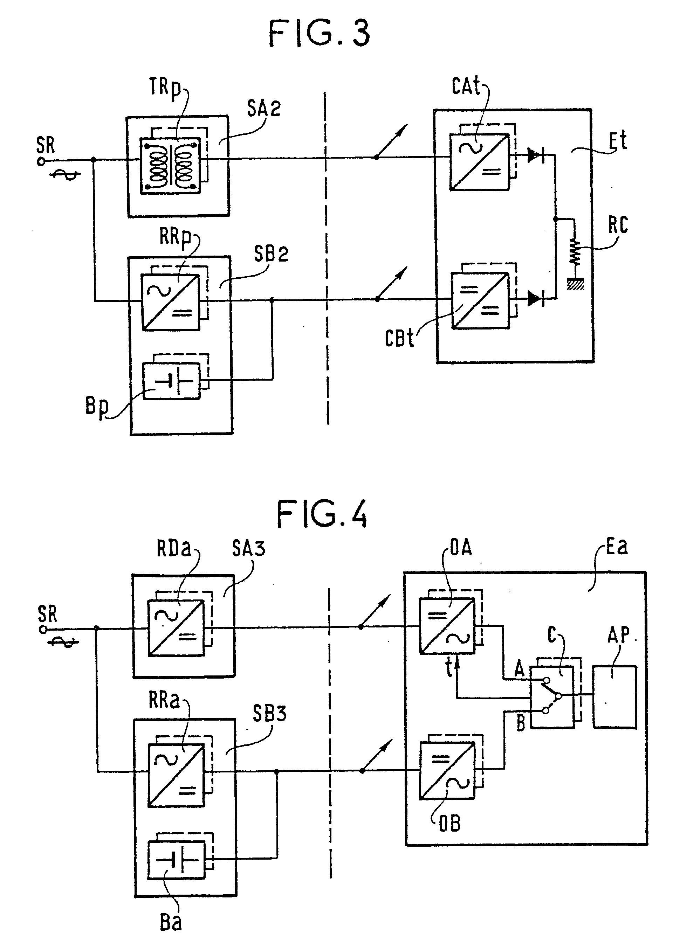

La figure 3 montre une variante du cas précédent, permettant toujours l'alimentation d'ensembles électroniques en courant continu.

La source primaire non secourue SA2 fournit du courant alternatif par l'intermédiaire d'un ou plusieurs transformateurs TRp (dans cette figure et les suivantes on n'a représenté qu'un seul ensemble électronique. Bien entendu, comme dans le cas précédent, il peut y en avoir un nombre quelconque).

Le transformateur TRp peut avoir seulement un rôle d'isolement, ou avoir également une fonction d'abaissement de tension. Les convertisseurs CAt de la source secondaire sont dans ce cas de type alternatif continu.

Naturellement dans le but d'avoir un seul type de convertisseur par ensemble électronique ou même pour toute l'installation, on pourra utiliser des convertisseurs mixtes utilisés en mode alternatif-continu pour les sources alimentées par SA2, et en mode continu-continu pour les sources de secours.

La figure 4 montre une application de l'invention à l'alimentation d'équipements ou appareils nécessitant une source alternative sans coupure, par exemple des calculateurs.

La source primaire comporte, comme dans le cas de la figure 1, une source continue non secourue SA3 et une source continue SB3 secourue par une batterie Ba. La source SA3 est formée d'au moins un redresseur filtré RDa non régulé. La source SB3 comporte au moins un redresseur régulé RRa.

La source secondaire est formée d'au moins un onduleur OA alimenté par la source SA3, et au moins un onduleur de secours OB alimenté par la source SB3.

L'appareil est alimenté par l'un ou l'autre des onduleurs à travers un dispositif de commutation C qui peut être statique ou électromagnétique. La commutation est commandée par une ligne de test t reliée à l'onduleur OA : le commutateur bascule de l'entrée A à l'entrée B lorsque la tension en sortie de l'onduleur OA tombe au-dessous d'un seuil préréglé. Il bascule en sens inverse lorsque la tension remonte et dépasse un seuil préréglé.

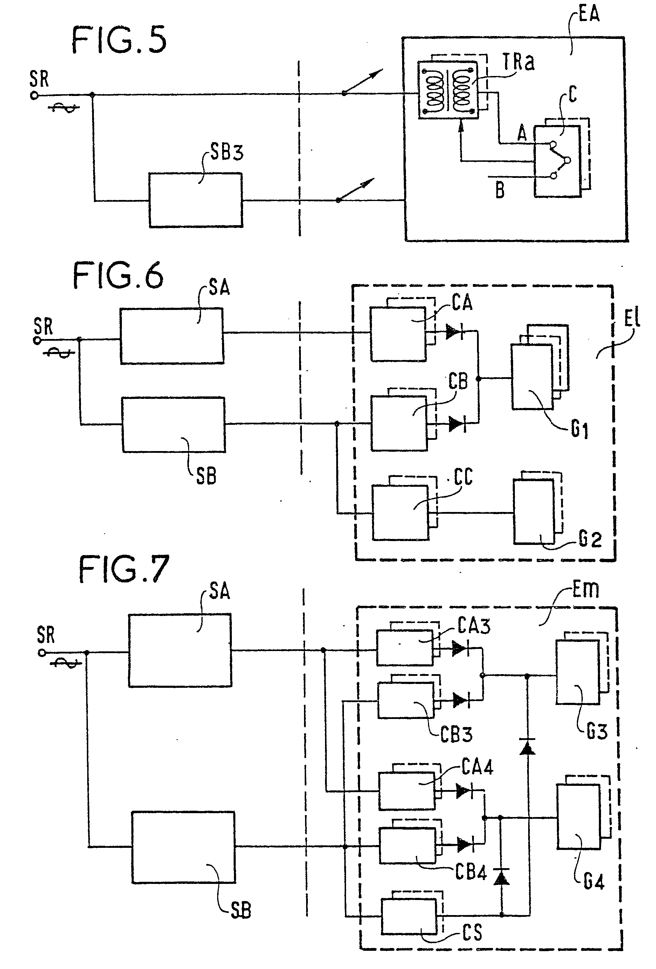

Dans une variante (fig. 5) de cette application, l'alimentation en fonctionnement normal ne comporte pas de source primaire : le secteur (réseau SR) est relié directement à un transformateur d'isolement et d'adaptation situé dans l'ensemble EA. Le transformateur alimente directement l'appareil Ap à travers le commutateur C. La source secourue et l'onduleur de secours sont les mêmes que dans la figure 4.

La figure 6 concerne un système mixte pour un ensemble électronique comportant des organes redondants et des sources secondaires redondantes mais non dupliquées. Sur la figure, le système est appliqué à une variante de l'application de la figure 1.

Les convertisseurs CA, CB, CC sont de type continu-continu. Les organes électroniques de l'ensemble El sont divisés en deux groupes G1 et G2 d'organes de même type. Le groupe G1 comporte une alimentation dupliquée, et le groupe G2 une alimentation simple CC reliée à la source secourue. Pour cela la puissance des redresseurs régulés de cette source est plus forte que dans le cas de la figure 1, pour permettre de fournir en fonctionnement normal le courant nécessaire au convertisseur CC.

La figure 7 montre une application du système représenté à la figure 1 au cas d'ensembles électroniques de haute sécurité. L'ensemble Em comporte deux groupes d'organes, identiques ou non, comportant chacun une alimentation dupliquée. La sécurité de l'alimentation est renforcée par la présence d'un convertisseur supplémentaire de secours CS, alimenté par la source SB et qui peut remplacer en cas de panne n'importe lequel des convertisseurs CA3, CB3, CA4, CB4.

Bien entendu l'invention n'est pas limitée à l'application décrite. En particulier, dans un central téléphonique par exemple, on pourra associer différentes solutions adaptées aux différents types d'organes qui ont des types d'alimentation et des exigences de sécurité différentes.

## Revendications

1. Système de distribution d'énergie pour ensembles électroniques (E), formé d'une part d'une alimentation primaire reliée à un réseau (SR) alternatif et comportant une source primaire (SA) utilisée en fonctionnement normal et une source primaire de secours (SB), et d'autre part d'une alimentation secondaire comportant des sources secondaires (CA) régulées implantées dans lesdits ensembles électroniques, caractérisé par le fait que ladite source primaire (SA) utilisée en fonctionnement normal est reliée dans chacun desdits ensembles (E) à un premier groupe de sources secondaires régulées (CA), et par le fait que ladite source primaire de secours (SB) est secourue par une batterie tampon (B) et est reliée dans chacun desdits ensembles (E) à un second groupe de sources secondaires régulées (CB).

2. Système de distribution d'énergie suivant la revendication 1, caractérisé par le fait que ladite source primaire (SA) est formée de redresseurs non régulés (RD1 à RDn).

3. Système de distribution d'énergie suivant la revendication 1, caractérisé par le fait que ladite source primaire (SA) n'est pas secourue et ne délivre plus aucun courant en cas de panne du réseau (SR).

4. Système de distribution d'énergie suivant la revendication 1, caractérisé par le fait que la source primaire de secours (SB) comporte au moins un redresseur régulé (RR1 à RRi) dimensionné pour pouvoir fournir simultanément le courant de charge de ladite batterie (B) et le courant de fonctionnement à vide du second groupe de sources secondaires régulées (CB).

5. Système de distribution d'énergie suivant la revendication 1, caractérisé par le fait que ladite source primaire (SA2) est un transformateur (TRp) et que le premier groupe de sources secondaires régulées (CAt) est formé de convertisseurs alternatif-continu.

6. Système de distribution d'énergie suivant la revendication 1, caractérisé par le fait que lesdits premier et second groupes de sources secondaires comportent des convertisseurs (CA, CB) reliées à une charge à alimenter (RC) par l'intermédiaire de diodes de découplage.

7. Système de distribution d'énergie suivant la revendication 1, caractérisé par le fait que lesdits premier et second groupes de sources secondaires comportent des onduleurs (OA, OB) reliés à un appareil (AP) à alimenter en courant alternatif par l'intermédiaire d'un dispositif de commutation (C) asservi à la tension de sortie de l'onduleur du premier groupe (OA).

8. Système de distribution d'énergie suivant la revendication 1 dans lequel un ensemble électronique (EI) comporte des organes de même type répartis en deux groupes (G1, G2), les organes de l'un des groupes (G1) étant alimentés en parallèle par les deux groupes de sources secondaires (CA, CB), caractérisé par le fait que les organes de l'autre groupe (G2) sont alimentés seulement par une source secondaire (CC) reliée à la source primaire de secours (SB).

## Claims

1. A power distribution system für electronic assemblies (E), this system comprising on the one hand a primary supply connected to an AC network (SR) and including a primary source (SA) which is used for normal operation, and a primary emergency source (SB), and on the other hand a secondary supply including stabilized secondary sources (CA) which are located in said electronic assemblies, characterized in that said primary source (SA) which is used for normal operation is connected in each one of said assemblies (E) to a first group of stabilized secondary sources (CA) and that said primary emergency source (SB) is backed up by a buffer battery (B) and is connected in each one of said assemblies (E) to a second group of stabilized secondary sources (CB).

2. A power distribution system according to claim 1, characterized in that said primary source (SA) is constituted by non-stabilized rectifiers (RD1 to RDn).

3. A power distribution system according to claim 1, characterized in that said primary source (SA) is not backed up and does not furnish any more current in case of a network (SR) breakdown.

4. A power distribution system according to claim 1, characterized in that the primary emergency source (SB) comprises at least one stabilized rectifier (RR1 to RRi) designed to furnish simultaneously the charge current for said battery (B) and the operative current without load of the second group of stabilized secondary sources (CB).

5. A power distribution system according to claim 1, characterized in that said primary source (SA2) is constituted by a transformer (TRp) and that the first group of stabilized secondary sources (CAt) is made of AC-DC converters.

6. A power distribution system according to claim 1, characterized in that said first and second groups of secondary sources comprise converters (CA, CB) which are connected to a load (RC) via decoupling diodes.

7. A power distribution system according to claim 1, characterized in that said first and second groups of secondary sources comprise DC-to-AC converters (OA, OB) which are connected to an apparatus (AP), to which AC power is to be supplied, via a switching device (C) which is controlled by the output voltage of the DC-to-AC converter of the first group (OA).

8. A power distribution system according to claim 1, in which an electronic assembly (EI) comprises components of the same type distributed in two groups (G1, G2), the components of one of these groups (G1) being parallelly supplied with power by the two groups of secondary sources (CA, CB), characterized in that the components of the other group (G2) are supplied with power only by one secondary source (CC) connected to the primary emergency source (SB).

**Ansprüche**

1. Energieverteilungssystem für elektronische Anlagen (E), das einerseits von einer Primärversorgung, die an ein Wechselstromnetz (SR) angeschlossen ist und eine im Normalbetrieb verwendete Primärstromquelle (SA) und eine Notprimärstromquelle (SB) aufweist, und andererseits von einer Sekundärversorgung mit geregelten Sekundärstromquellen (CA) gebildet wird, die in die elektronischen Anlagen eingebaut sind, dadurch gekennzeichnet, daß die im Normalbetrieb verwendete Primärstromquelle (SA) in jeder der Anlagen (E) an eine erste Gruppe von geregelten Sekundärstromquellen (CA) angeschlossen ist und daß die Notprimärstromquelle (SB) von einer Pufferbatterie (B) unterstützt wird und in jeder der Anlagen (E) mit einer zweiten Gruppe geregelter Sekundärstromquellen verbunden ist.

2. Energieverteilungssystem nach Anspruch 1, dadurch gekennzeichnet, daß die Primärstromquelle (SA) von ungeregelten Gleichrichtern (RD1 bis RDn) gebildet wird.

3. Energieverteilungssystem nach Anspruch 1, dadurch gekennzeichnet, daß die Primärstromquelle (SA) nicht unterstützt ist und somit bei Netzausfall (SR) keinen Strom mehr liefert.

4. Energieverteilungssystem nach Anspruch 1, dadurch gekennzeichnet, daß die Notprimärstromquelle (SB) mindestens einen geregelten Gleichrichter (RR1 bis RRi) aufweist, der so dimensioniert ist, daß er gleichzeitig den Ladestrom für die Batterie (B) und den Leerlauf-Betriebsstrom der zweiten Gruppe geregelter Sekundärstromquellen (CB) liefern kann.

5. Energieverteilungssystem nach Anspruch 1, dadurch gekennzeichnet, daß die Primärstromquelle (SA2) ein Transformator (TRp) ist und daß die erste Gruppe von geregelten Sekundärstromquellen (CAt) von Wechsel-Gleichstromwandlern gebildet wird.

6. Energieverteilungssystem nach Anspruch 1, dadurch gekennzeichnet, daß die erste Gruppe und die zweite Gruppe von Sekundärstromquellen Wandler (CA, CB) aufweisen, die über Entkopplungsdioden an eine zu versorgende Last (RC) angeschlossen sind.

7. Energieverteilungssystem nach Anspruch 1, dadurch gekennzeichnet, daß die erste Gruppe und die zweite Gruppe von Sekundärstromquellen Wechselrichter (OA, OB) aufweisen, die an ein mit Wechselstrom zu versorgendes Gerät (AP) über eine von der Ausgangsspannung des Wechselrichters (OA) der ersten Gruppe nachgeführte Umschaltvorrichtung (C) angeschlossen ist.

8. Energieverteilungssystem nach Anspruch 1, in dem eine elektronische Anlage (EI) in zwei Gruppen (G1, G2) aufgeteilte Organe gleichen Typs enthält, wobei die Organe der einen Gruppe (G1) parallel von den beiden Gruppen von Sekundärstromquellen (CA, CB) versorgt werden, dadurch gekennzeichnet, daß die Organe der anderen Gruppe (G2) nur von einer Sekundärstromquelle (CC) versorgt werden, die mit der Notprimärstromquelle (SB) verbunden ist.

0 035 727

## FIG.1

## FIG. 2

# FIG. 3

# FIG. 4

FIG.5

FIG.6

FIG.7

3